# EUROPÄISCHE PATENTSCHRIFT

(11) **EP 0 670 989 B1**
(45) Veröffentlichungstag und Bekanntmachung des Hinweises auf die Patenterteilung: **19.08.1998**
(21) Anmeldenummer: 94901853.5
(22) Anmeldetag: 23.11.1993
(51) Int. Cl.: G01B 5/00, G01B 3/00

(54) **KOORDINATENMESS VERFAHREN UND -VORRICHTUNG**
COORDINATE MEASUREMENT METHOD AND INSTRUMENT
PROCEDE ET DISPOSITIF PERMETTANT DE MESURER DES COORDONNEES

(30) Priorität: 26.11.1992 DE 4239734
(43) Veröffentlichungstag der Anmeldung: 13.09.1995
(73) Patentinhaber: FREDART SONDERMASCHINEN GmbH, D-40547 Düsseldorf (DE)
(72) Erfinder: KUCHENHART, Friedrich-Wilhelm, D-40547 Düsseldorf (DE)
(74) Vertreter: Sparing - Röhl - Henseler Patentanwälte
(86) Internationale Anmeldenummer: EP9303284
(87) Internationale Veröffentlichungsnummer: WO9412850

(56) Entgegenhaltungen:
- DE-A- 4 114 254
- DE-B- 1 247 810
- FR-A- 2 564 579
- GB-A- 2 207 976
- US-A- 3 368 283

## Beschreibung

Die Erfindung bezieht sich auf das Gebiet der Koordinatenmeßtechnik. Ein umfassender Überblick über dieses Gebiet findet sich in der Veröffentlichung "KOORDINATENMESSTECHNIK FÜR DIE QUALITÄTSSICHERUNG", von T. Pfeifer (Hrsg.), VDI Verlag 1992.

Danach wird eine Meßeinrichtung an einer Kreuzschlittenanordnung angebracht, die es ermöglicht, den Ort eines Tastorgans im Verfahrbereich des Kreuzschlittens zu kennen. Das Tastorgan wird in Ausfluchtung mit einem Meßpunkt eines zu vermessenden Objekts gebracht, und bei Erreichen der Ausfluchtung werden die Koordinaten des Tastorgans abgelesen. Sollen beispielsweise die Lage und der Durchmesser einer Bohrung, deren Achse senkrecht zu der Meßebene verläuft, bestimmt werden, so kann man drei Punkte erfassen und daraus die gewünschten Angaben rechnerisch ermitteln.

Verschiedene Typen von Tastorganen sind bekannt. Eine weitverbreitete Bauart, die den Gegenstand der DE-C-27 57 453 bildet, umfaßt einen Tastarm, mit dessen freiem Ende quer zur Meßebene verlaufende Flächen angetastet werden. Im Augenblick der Berührung wird ein Signal ausgelöst, das die Abspeicherung der Koordinaten des Tastarms an dieser Stelle auslöst. Korrekturen hinsichtlich der Eigenabmessungen des Tastarms, seiner Durchbiegung usw. sind in der erstgenannten Veröffentlichung erörtert. Es wird auch darauf hingewiesen, daß der Verlauf von Kanten mit diesem Tastorgan nicht erfaßt werden kann.

In dem erwähnten Buch wird auch ein messendes System erwähnt. Bei diesem ist ein Tastarm an drei Federbandpaaren in drei zueinander senkrechten Ebenen auslenkbar aufgehangen. Ersichtlich kann man auch mit diesem System den Verlauf von Kanten nicht erfassen. Beispiele solcher Systeme, mit denen gegebenenfalls auch eine Erfassung in drei zueinander senkrechten Ebenen erfolgt, sind in DE-U-7231877, US-A-4,611,403 und DE-C-3234471 zu finden. DE-A-4038698 offenbart ein einfaches System, bei dem jeder von zwei zueinander senkrechten Auslenkrichtungen ein eigener Meßwertaufnehmer zugeordnet ist.

Den Verlauf von Kanten (und nicht nur einzelner Punkte auf Flächen) erfassen zu können wäre höchst wünschenswert. Beispielsweise müssen für bestimmte Fälle, etwa bei Formfräsern, Gewindeschneidwerkzeugen, aber auch bei Stanzwerkzeugen und dergleichen die Schneiden einen bis auf wenige Mikron genauen Verlauf haben. Bei solchen Anwendungsfällen behilft man sich daher mit optischen "Tastorganen". Da die Lichtwellenlänge bereits bei etwa einem halben Mikron liegt, sind der Genauigkeit Grenzen gesetzt, und man muß sich gegebenenfalls mit Interpolationen behelfen. Ferner sind solche Meßverfahren sehr zeitaufwendig, so daß man meist nicht den Gesamtverlauf einer Kante (oder Schneide) bestimmt, sondern sich mit einigen für "wichtig" gehaltenen Punkten begnügt.

In der DE-C-34 34 338 ist ein Verfahren zum Abrichten von Schleifscheiben für Formwerkzeuge beschrieben. Dabei wird nach einem ersten Schleifversuch die Schneide vermessen, mit einem Soll-Verlauf verglichen und die Scheibe entsprechend den festgestellten Abweichungen abgerichtet. Dieses Verfahren setzt voraus, daß der gesamte Ist-Verlauf der Werkzeugschneide bestimmt werden kann.

Aufgabe der Erfindung ist es, ein mechanisches Abtastverfahren insbesondere für den Verlauf von Schneiden und anderen Kanten anzugeben (worauf allerdings das Verfahren nicht beschränkt ist), das mit hoher Genauigkeit im Mikron-Bereich bei beliebiger Auflösung und weitgehend automatisch arbeitet. Die Erfindung betrifft auch zur Durchführung des Verfahrens bestimmte und geeignete Vorrichtungen.

Die Lösung dieser Aufgabe ergibt sich aus den unabhängigen Patentansprüchen; die abhängigen Patentansprüche definieren Weiterbildungen dieses Konzepts.

Überlegungen, auf denen die Erfindung beruht, und Vorrichtungen zum Durchführen des erfindungsgemäßen Verfahrens werden nachstehend unter Bezugnahme auf die beigefügten Zeichnungen im einzelnen erläutert.
Fig. 1 ist eine Prinzipdarstellung zur Erläuterung der Grundlagen der Erfindung,
Fig. 2 ist ein Axialschnitt durch einen Meßkopf in einer ersten Ausführungsform,
Fig. 3, 4, 5 bzw. 6 sind Schnitte entsprechend den Schnittlinien 3-3, 4-4, 5-5 bzw. 6-6 in Fig. 2, jeweils gesehen in Pfeilrichtung,
Fig. 7 ist eine Ausschnittsvergrößerung des in Fig. 2 mit "X" markierten Zeichnungsteils,
Fig. 8 ist ein Schnitt nach Linie 8-8 in Fig. 7,
Fig. 9 ist ein Blockschema der Gesamtinstallation,
Fig. 10 ist eine schematische Draufsicht auf eine vereinfachte Vorrichtung, die insbesondere für das Vermessen der Schneiden umlaufender Werkzeuge ausgebildet ist und nur in zwei Quadranten arbeitet.

Zunächst sei auf die Grundlagen der Erfindung eingegangen. Dabei wird nachstehend zunächst der Fall betrachtet, daß eine Werkzeugschneide vermessen werden soll, die in einer Meßebene liegt. Danach wird der Fall betrachtet, daß eine gewundene Schneide zu vermessen ist. Schließlich wird darauf eingegangen, daß die Form einer unregelmäßigen, jedoch stetigen Fläche zu vermessen ist. Soweit hier der Begriff "Schneide" verwendet wird, versteht es sich, daß dies nur ein Beispiel ist und daß es sich auch um nicht-schneidende Kanten irgendwelcher Gegenstände handeln kann.

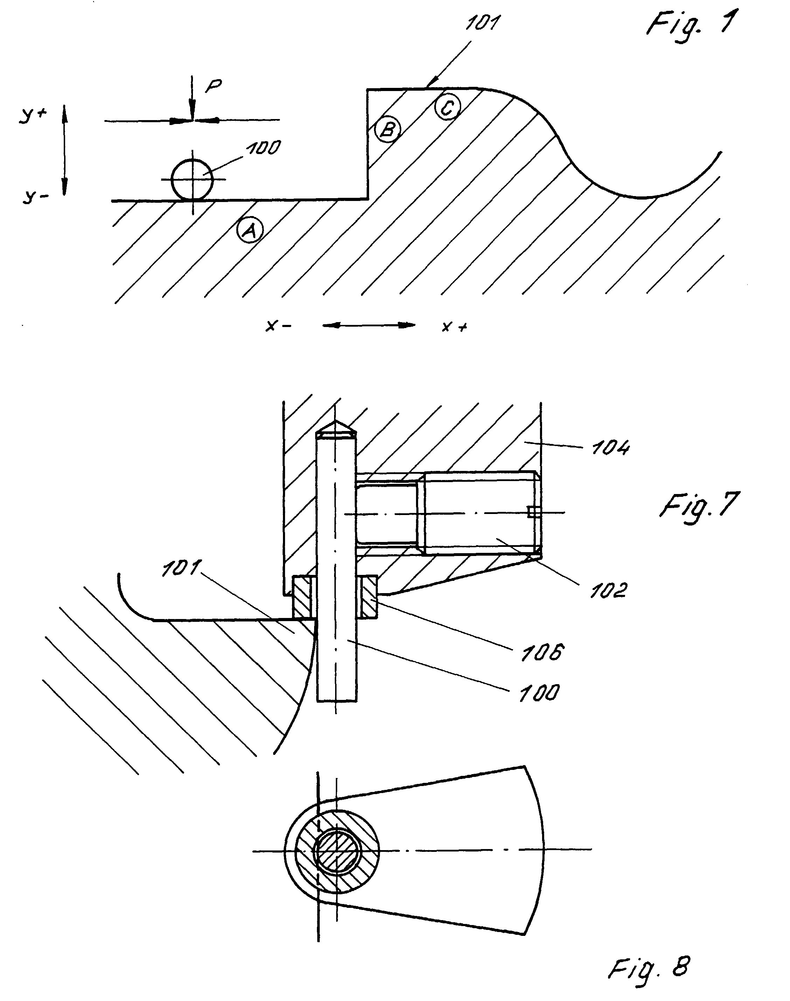

Fig. 1 stellt einen Taststift 100 dar, der beispielsweise eine zur Zeichnungsebene -- die zugleich Meßebene ist -- senkrechte zylindrische Form hat. Mit diesem Taststift soll der Verlauf einer Werkzeugschneide 101 abgetastet werden, wobei der Stift längs dieser Schneide verfahren wird und zu jedem Inkrement in X-Richtung die auf diesem Inkrement erfolgte Auslenkung in Y-Richtung erfaßt wird. Damit der Taststift dem Verlauf der Schneide folgen kann, muß auf ihn eine Anstellkraft P wirken; diese Anstellkraft soll möglichst klein sein, damit elastische Deformationen im Gesamtsystem die Messung nicht oder nur unterhalb der Meßgrenze verfälschen. Und da der erst noch zu messende Schneidenverlauf natürlich nicht bekannt ist, ist bei den bisher üblichen messenden Systemen der Taststift in der Meßebene allseitig gegen dieselbe kleine von Federn aufgebrachte Anstellkraft auslenkbar, wobei die Federkraft in der Ruheposition Null ist. Es sei ferner angenomnmen, daß -- wie im Stand der Technik üblich -- die Kraft von einer Feder mit linearer Kennlinie aufgebracht wird.

Es sei nun angenommen, daß die Schneide einen ersten Abschnitt A aufweist, der parallel zur X-Richtung verläuft, und daß der Taststift in Y-Richtung an die Schneide 101 herangefahren ist und gegen die Anstellkraft P ausgelenkt worden ist. Wird nun die Schneide relativ zum Taststift in Richtung -X verlagert, so wird der Taststift zunächst mit der Haftreibungskraft rₕ^{.}P (mit rₕ als Haftreibungskoeffizienten) an der Schneide "festgehalten", bis die ansteigende Rückstellkraft in X-Richtung ihn losreißt. Dann folgt er dem Taststiftträger, und da es sich um ein schwingungsfähiges Masse-Feder-System handelt, führt der Taststift reibungsgedämpfte Schwingungen aus, bis an irgendeiner Stelle die Rückstellkraft in X-Richtung die Kraft r_{g}^{.}P (mit r_{g} als Gleitreibungskoeffizient) unterschreitet, womit der Taststift wieder zum Stillstand kommt.Diese Schwingungen aufgrund des bekannten "stick-slip-Verhaltens" machen ein so arbeitendes Meßsystem für höhere Genauigkeitsanforderungen unbrauchbar.

Dies gilt auch dann, wenn man die Schwingungsamplituden mittels relativ komplizierter Dämpfungsmaßnahmen klein zu halten sucht.

Aus der vorstehenden Erläuterung ergibt sich auch rückblickend, warum in der ersterwähnten Veröffentlichung dem antastenden System die praktisch größte Bedeutung beigemessen wurde.

Um das vorstehend umrissene Problem zu lösen, wird die im Patentanspruch 1 definierte Verfahrensweise gemäß der Erfindung vorgeschlagen. Die vorzugsweise allseitige Auslenkbarkeit des Tastorgans in der Meßebene wird beibehalten, jedoch werden die Anstellkräfte so modifiziert, daß die kleine Anstellkraft sich im wesentlichen senkrecht zu der abzutastenden Schneide stellt, während senkrecht dazu das Tastorgan vorzugsweise halbstarr abgestützt ist. "Halbstarr" bedeutet, daß eine Auslenkung in dieser Richtung erst dann möglich ist, wenn eine vorgegebene Fesselungskraft überwunden ist; das bedeutet, daß bei Verwendung einer Feder das Tastorgan mit einer vorgegebenen Federvorspannung gegen einen Anschlag gedrückt wird. Diese Fesselungskraft wird jedenfalls deutlich größer als die Anstellkraft, multipliziert mit dem Haftreibungskoeffizienten der beteiligten Materialien plus einem Sicherheitszuschlag, gewählt. Dieses "Kräftetriplett" wird nun bezüglich seiner Richtung so gesteuert, daß es dem abgetasteten Schneidenverlauf folgt, ohne daß man an der Größe der Kräfte etwas zu ändern braucht. In einer vereinfachten Version ist das Abtastorgan nur in zwei definierten Richtungen translatorisch verlagerbar, von denen jeweils die ungünstigere Richtung gesperrt wird.

Die halbstarre Abstützung ist gegenüber einer starren Abstützung, etwa durch eine Führung, bevorzugt. Man betrachte in Fig. 1 den Übergang A/B des Schneidenverlaufs. Bei der erfindungsgemäßen Vorgehensweise wird das letzte vom Taststift durchlaufene Inkrement in X-Richtung auf Abschnitt A noch keine Änderung des Schneidenverlaufs "melden", und beim nächsten Inkrement stößt zwar der Taststift auf den Abschnitt B, doch kann er entgegen der Fesselungskraft ausweichen, ohne daß das System beschädigt wird. (Während des normalen Abtastlaufs hingegen verhält sich das System so, als sei der Taststift tatsächlich starr abgestützt). Dies löst nun erfindungsgemäß ein Signal aus, das bewirkt, daß das gesamte "Kräftetriplett" bestehend aus Anstellkraft und den beiden gegeneinander gerichteten Fesselungskräften um eine zur Zeichnungsebene senkrechte Achse verdreht wird, bis die Anstellkraft in Richtung +X gerichtet ist.

Es wird also nun der Abschnitt B der Schneide abgefahren, bis das Tastorgan die "Außenecke" erreicht, die in den Abschnitt C der Schneide überleitet. Es ist festzuhalten, daß solche Außenecken bei allen bekannten Systemen zum "Absturz" führen, das System also stillgesetzt werden muß und weitere Messungen erst nach einem manuellen Eingriff möglich sind. Bei dem erfindungsgemäßen Verfahren hingegen wird eine solche Außenecke genauso automatisch "abgefahren" wie irgendein anderer Verlauf.

Nachstehend wird eine Vorrichtung erläutert, mit der das erfindungsgemäße Verfahren realisierbar ist.

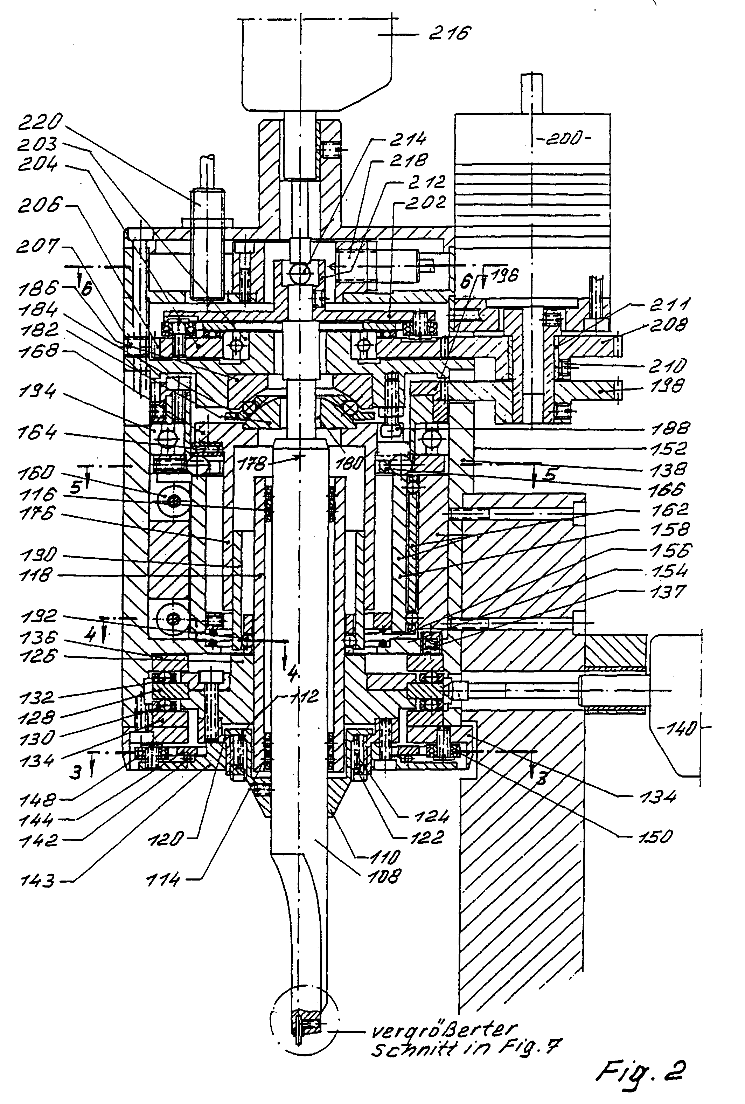

Fig. 2 stellt einen Axialschnitt durch einen Meßkopf gemäß der Erfindung dar. Es sei angenommen, daß die Schnittebene die Y-Achse des Kreuzschlittens enthält, auf dem der Meßkopf montiert ist. Es ist darauf hinzuweisen, daß zwei unterschiedliche Varianten in dem Zeichnungsteil links bzw. rechts der Mittelachse dargestellt sind.

Das Tastorgan ist ein zylindrischer Zapfen 100 aus einem verschleißarmen Material, etwa Hartmetall oder Korund, und/oder mit einer verschleißmindernden Beschichtung versehen, etwa aus diamantähnlichem Kohlenstoff. Der Zapfen 100 ist mittels einer Schraube 102 in einer Bohrung am freien Ende eines Schwerts 104 festgeklemmt; er kann gegebenenfalls gegen ein anderes Tastorgan, etwa eine Tastkugel, für andere Meßaufgaben ausgetauscht werden. Das freie Ende des Taststifts ist von einem reibungsarmen und verschleißarmen, gesondert gefertigten und vorzugsweise verklebten Bund 106 umschlossen, der beim Abtasten einer Schneide auf deren Spanfläche "reitet".

Das Schwert ist nach oben um einen zylindrischen Schaft 108 verlängert, dessen Außenseite gehärtet und geschliffen ist. Auch das obere Stirnende des Schaftes 108 ist gehärtet und plan geschliffen. Zwei Kugelführungseinheiten 114, 116 bilden zusammen mit einem Führungsrohr 118 eine Geradführung für den Schaft 108 in axialer Richtung. Nahe dem unteren Schaftende ist auf den Schaft eine Muffe 110 mit einem Umfangsflansch 112 geklemmt, die auf einem Innenflansch 120 aufliegend die untere Endposition des Schaftes definiert. Auf einer unteren nach innen ragenden Auskragung 122 des Innenflansches 120 stützt sich eine Kompensationsfeder 124 ab, deren oberes Ende den Umfangsflansch 112 untergreift und das auf ihr lastende Gewicht bis auf einen gewünschten Restwert kompensiert.

Der Innenflansch 120 bildet einen Teil eines Schwimmtisches 126, der außen auf dem Führungsrohr 118 so befestigt ist, daß das Rohr nicht deformiert wird; vorzugsweise sind beide Teile miteinander verklebt. Der Schwimmtisch trägt eine beidseits planparallel geschliffene Ringscheibe 128, die in beiden Axialrichtungen über Kugelkäfige 130, 132 an Gegen-Ringscheiben 134 bzw. 136 abgestützt ist. Mittels dreier Stellschrauben 137, von denen in Fig. 2 nur eine erkennbar ist, läßt sich diese zweiseitig wirkende Axiallagerung einregulieren.

Auf diese Weise kann sich die Baugruppe, bestehend aus dem Schaft 108 und den mit ihm verbundenen Teilen, den Kugelführungseinheiten 114, 116, dem Führungsrohr 118 und dem mit ihm verbundenen Schwimmtisch 126 in allen Richtungen senkrecht zur Schaftachse relativ zu dem Kopfgehäuse 138 und den mit ihm verbundenen Teilen, beispielsweise den Gegen-Ringscheiben 134, 136 bewegen. Die Y-Komponente solcher Bewegungen wird mittels eines Meßtasters 140 erfaßt, die X-Komponente (also senkrecht zur Zeichenebene) wird mittels eines gleichartigen in Fig. 2 nicht sichtbaren Meßtasters ebenfalls erfaßt.

Um unkontrollierte Drehbewegungen des Schwimmtisches zu unterbinden, ist eine Drehsicherung vorgesehen, die jedoch die "Schwimm"-Bewegungen möglichst wenig behindern darf. Sie besteht aus einer mittels Schrauben 139 am Schwimmtisch befestigten und über Kugeln 142 auf einem unteren Abschlußdeckel 143 abgestützten Scheibe 144, an deren Umfang unter 90° zueinander versetzt Radial-Langlöcher 146 vorgesehen sind. In diese ragen, diametral einander gegenüber angeordnet, erste Kugellager 148, deren Innenringe auf mit dem Deckel 143 verbundenen Zapfen sitzen, während in die um 90° dazu versetzten Langlöcher 146 gleichartige Kugellager 150 ragen, deren Innenringe jedoch auf an einem inneren Deckel 137 angeordneten Zapfen sitzen (in Fig. 2 ist links ein Lager 148, rechts ein Lager 150 dargestellt, obwohl diese Lager in Wirklichkeit um 90° zueinander versetzt sind). Die Lageraußenringe greifen mit Spiel in die Langlöcher, so daß sie nur wirksam werden, wenn eine Tendenz zur Verdrehung vorliegt.

Vom zylindrischen Außenmantel 152 des Gehäuses 138 erstreckt sich radial einwärts eine ringförmige Zwischenwandung 154. Auf ihr stützt sich die Hauptfeder 156 ab, die die Anstell- und Fesselungskräfte aufbringt. Sie wirkt auf eine Übertragungshülse 158, die in Axialrichtung geradegeführt beweglich ist; der Bewegungshub beträgt allerdings höchstens wenige Millimeter. In der Ausführungsform auf der linken Zeichnungsseite dienen drei oder vier Paare von Tangential-Kugellagern 160, deren Innenringe am Gehäuse 138 befestigt sind, als Führungsmittel. Dies erlaubt zwar eine einstellbare Zentrierung, macht jedoch die Übertragungshülse drehfest. In der rechts dargestellten Ausführungsform ist die Übertragungshülse mittels Kugelführungseinheiten 162 in einer Bohrung des Gehäuses geführt.

Auf dem oberen planen, gehärteten und geschliffenen Stirnende der übertragungshülse 158 laufen fünf Kugeln 170, 171, 172, 173 und 174, die in einem Käfig 166 geführt sind, jedoch den oben erwähnten geringfügigen Axialverlagerungen der Übertragungshülse 158 folgen können, ohne aus dem Käfig herauszufallen. Auf ihrer der Übertragungshülse abgekehrten Seite ruht auf diesen Kugeln, abgestützt über ein Axiallager 164, der Außenbund 168 eines Bauteils, das aus noch zu erläuternden Gründen als "Pendel" 176 bezeichnet wird. Das Pendel 176 besitzt einen virtuellen Aufhängepunkt 178, der dadurch entsteht, daß die Oberseite des Pendels eine von dem Schaft 108 mit Spiel in einer Bohrung 180 durchsetzte sphärische Schale 182 aufweist, die sich über einen Kugellagerring 184 an einer hohlsphärischen Lagerschale 186 abstützt. Der Außenbund 168 weist einen Radialeinschnitt auf, in den ein Kugelkopf einer Schraube 188 greift; dieser Kopf verhindert eine Drehung des Pendels, läßt jedoch allseitige Pendelbewegungen um den virtuellen Aufhängepunkt zu. Die ganze Anordnung wird von der Hauptfeder 156 über die Übertragungshülse 158, Kugeln 170 bis 174, Stirnlager 164, Außenbund 168, Schale 182, Lagerring 184 bis zur Lagerschale 186 unter Vorspannung gehalten.

Vom Außenbund 168 ragt ein Pendelschaft 190 nach unten, der das Führungsrohr 118 mit Spiel umschließt und nahe seinem unteren Ende eine Kugelführungsbuchse 192 mit nur einer einzigen Kugelreihe aufweist, über die der Pendelschaft an dem Führungsrohr abgestützt ist. Der zugehörige Käfig ist axial auf dem Schwimmtisch abgestützt.

Wird nun der Schwimmtisch und mit ihm das Führungsrohr 118 in der X-Y-Ebene relativ zum Gehäuse und damit auch relativ zum Pendel verlagert, überträgt die Kugelführungsbuchse 192 eine Auslenkkraft auf den Pendelschaft, der infolgedessen die Tendenz hat, um den virtuellen Aufhängepunkt 178 zu kippen. Dies ist erst dann möglich, wenn diese Auslenkkraft die von der Hauptfeder auf das Pendel übertragene Zentrierkraft überschreitet. Dabei erfolgt im Bereich der Kugelführungsbuchse eine geringfügige elastische Deformation, die jedoch nicht störend ist. Es ist ferner daran zu erinnern, daß der Schwimmtisch und mit ihm das Führungsrohr 118 gegen Drehung gesichert sind ebenso wie das Pendel, so daß die Eingriffsverhältnisse zwischen den letzteren immer gleich sind und deshalb Fehlausfluchtungen, Achsversatz und dergleichen Fertigungsungenauigkeiten keinen Einfluß auf das Meßergebnis haben.

Allerdings ist die oben erwähnte. Zentrierkraft nicht in allen Auslenkrichtungen gleich, weil die Kugeln 170 bis 174 asymmetrisch angeordnet sind, wie der Schnittdarstellung entnehmbar ist. Der Hebelarm A (=Anstell-Hebelarm), das ist der Abstand der von den Kugeln 170 und 174 definierten Kippachse von dem auf etwa gleicher Höhe liegenden virtuellen Aufhängepunkt des Pendels 176, ist nämlich wesentlich kleiner als der Hebelarm F (=Fesselungs-Hebelarm), das ist der Abstand der von den Kugeln 170, 171 bzw. 173, 174 definierten Kippachsen von der Pendelachse. Wenn nun dafür gesorgt wird, daß die Kippachse 170-174 sich möglichst genau parallel zu dem gerade abgetasteten Schneidensegment stellt, und zwar auf die Seite "vor" dem Tastorgan, so tritt der erfindungsgemäß vorgesehene Effekt ein. Es sei angemerkt, daß die Kugeln 171 und 173 nicht funktionsnotwendig sind; die drei Kugeln 170, 172 und 174 würden genügen. Allerdings würden dann die von den Kugelpaaren 170/172 bzw. 172/174 definierten Kippachsen für die Fesselungskräfte "schief" verlaufen. Es sei ferner angemerkt, daß eine der Kugeln 170 oder 174 um ein vorgegebenes Winkelmaß von außen mittels Stellring 175 verlagerbar ist, um die Größe des Hebelarms "A" einzustellen; auch dies ist nicht zwingend, denn eine einmal vorgegebene Größe der Hebelarme genügt für die Funktion.

Zum Zweck der Verdrehung des Kräftetripletts ist der Kugelkäfig 166 um die Achse des Schaftes 108 drehbar in einem Kugellager 194 gelagert und trägt einen Zahnkranz 196, der mit einem Abtriebsritzel 198 auf der Welle eines Motors 200 kämmt. Der Motor ist vorzugsweise ein Schrittmotor und wird in Abhängigkeit von den mittels der Meßtaster erfaßten Verlagerungen des Schwimmtischs so angesteuert, daß die Kugeln 170 bis 174 in die gewünschte Position nachgeführt werden. Dabei wälzen sich die Kugeln auf dem ihnen zugekehrten Ring des Axial- oder Stirnlagers 164 ab und nehmen diesen mit, während sich dessen den Kugeln abgekehrter Ring am drehfesten Pendelaußenflansch 168 abstützt.

Der Schaft 108, und mit ihm der Taststift 100, kann entweder drehfest sein oder zusammen mit den Kugeln 170 bis 174 nachgeführt werden. Zu diesem Zweck ist oberhalb der Lagerschale 186 eine Mitnehmerscheibe 202 auf dem Schaft 108 befestigt, die in analoger Weise Teil einer Drehsperre ist, wie sie oben für den Schwimmtisch mit den Bauteilen 142-150 beschrieben wurde; anhand der Zeichnung kann man die einander entsprechenden Bauteile leicht identifizieren. Abweichend von der Drehsicherung für den Schwimmtisch, bei der der Deckel 134 fest mit dem Gehäuse verbunden ist, ist hier jedoch das diesem Deckel entsprechende Bauteil eine auf einem Kugellager 203 sitzende Nabe 204, die einen Zahnkranz 206 trägt. Die Nabe kann mittels einer in den Zahnkranz eingreifenden Kunststoff-Klemmschraube 207 von außen festgelegt oder aber gelöst werden. Der Zahnkranz kämmt mit einem zweiten Ritzel 208 auf der Motorwelle, das mittels einer weiteren Madenschraube 210 entweder mit der Welle gekuppelt oder aber von ihr gelöst werden kann. Es ist immer nur eine der Madenschrauben gelöst: Wird Schraube 207 gelöst und 210 festgezogen, folgt der Schaft 108 den Drehungen der Anstellkraft und der Fesselungskräfte; im umgekehrten Falle ist der Schaft gegen Drehung abgestützt, ohne daß die Schwimmbewegungen in der X-Y-Ebene behindert werden, und die Welle des Motors 200 dreht sich, ohne daß Ritzel 208 mitgenommen wird, wobei die Gleitreibung durch eine Lagerhülse 211 klein gehalten wird.

Das Bauteil 202 ist axial nach oben um einen Fortsatz 212 verlängert, der über das freie Ende des Schaftes 108 hinausragt und eine Kammer bildet, in der lose eine Kugel 214 aufgenommen ist. Über sie stützt sich der Schaft 108 an dem Taststößel eines dritten Meßtasters 216 ab, der Auslenkungen des Schaftes 108 in Z-Richtung, also senkrecht zur X-Y-Ebene, erfaßt.

Die Schwimmbewegungen werden durch Endschalter 218 in den Richtungen X, -X, Y und -Y begrenzt, von denen in Fig. 2 nur einer dargestellt ist. Ebenso werden die Verlagerungen des Schaftes 108 in Z-Richtung durch einen Endschalter 220 begrenzt.

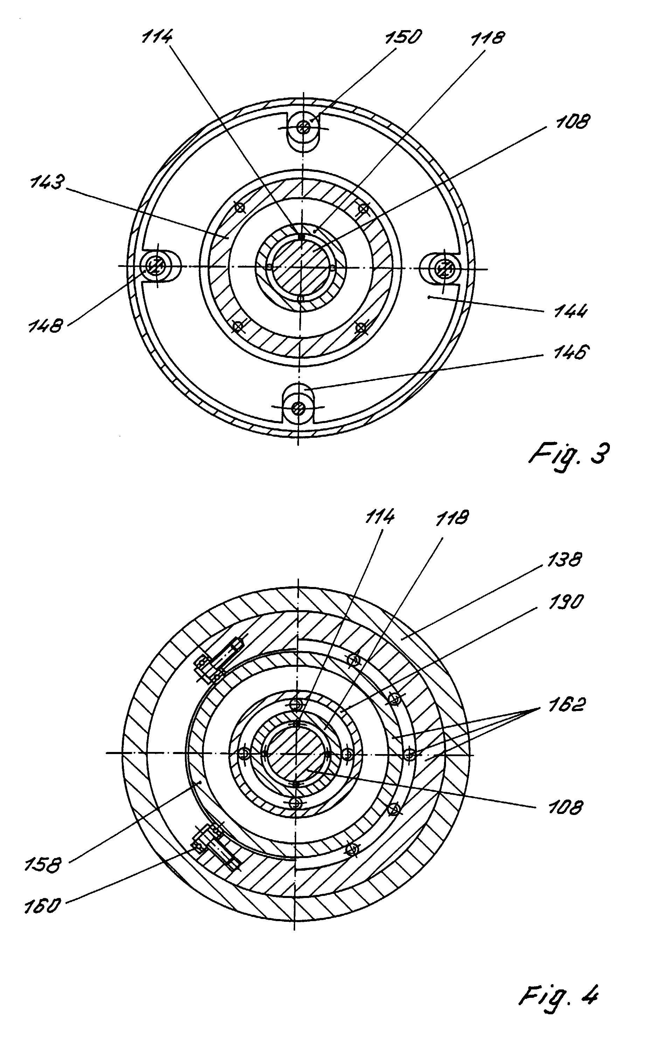

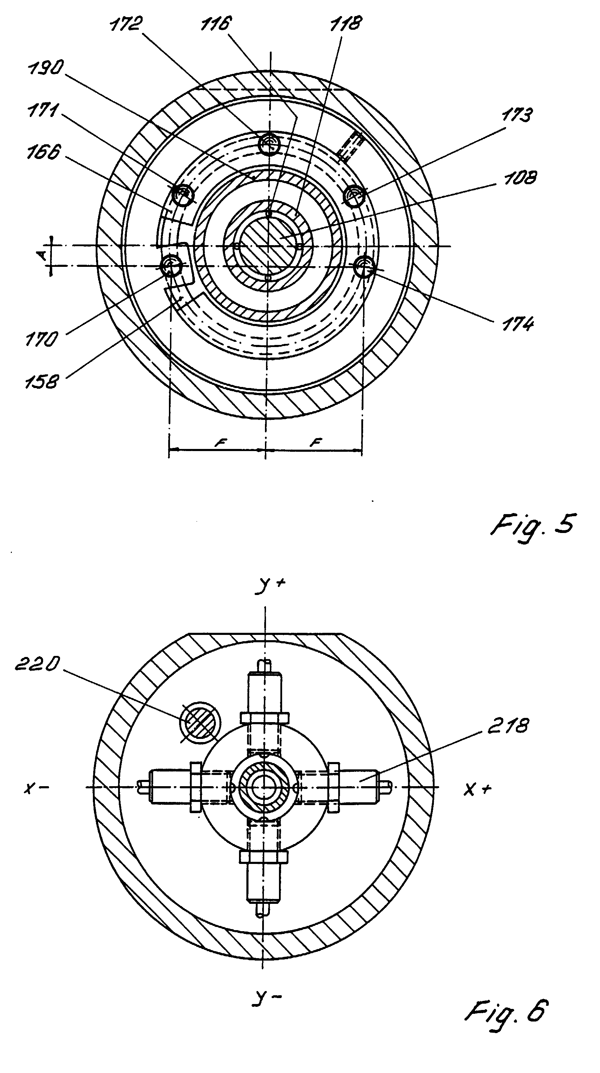

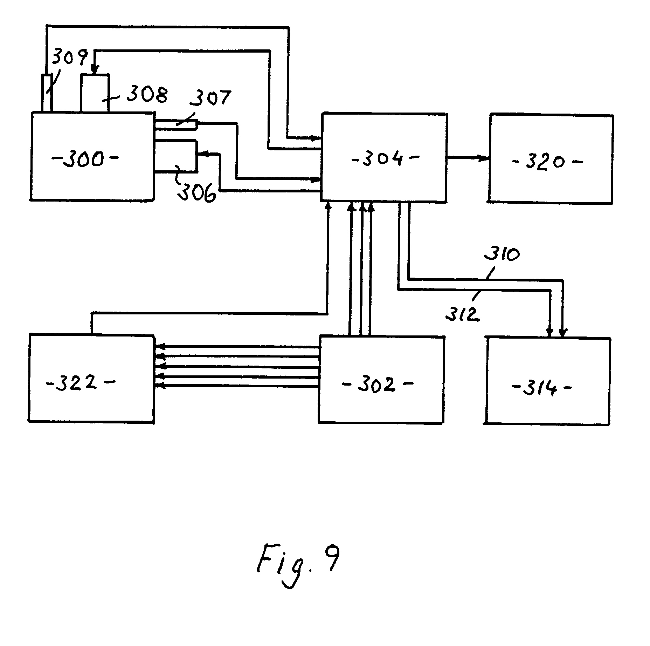

Fig. 9 zeigt ein Blockschema einer kompletten Anlage zum Vermessen der Schneide von Fräsern oder anderen Formwerkzeugen. Dabei ist angenommen, daß der in Fig. 2 bis 7 dargestellte Meßkopf mit seinem Gehäuse an dem in Y-Richtung verlagerbaren Schlitten einer Kreuzschlittenanordnung 300 montiert ist, während in Richtung X oder -X eine Aufnahmevorrichtung für ein zu vermessendes Werkzeug verlagerbar ist. Eine solche Aufnahmevorrichtung kann das Werkzeug einfach zwischen Spitzen spannen und im Falle eines in Ebenen liegenden Schneidenverlaufs gegen Drehung blockieren; ist der Schneidenverlauf räumlich gekrümmt, wird das Werkzeug gesteuert drehbar aufgenommen.

Der Meßkopf 302 liefert die Ausgangssignale der drei Meßtaster bezüglich der Verlagerungen des Tastorgans in den Richtungen X, Y und Z an eine Steuer- und Regeleinheit 304. Diese erzeugt Antriebssignale für die X- und Y-Verlagerungsantriebe 306 bzw. 308 des Kreuzschlittens, wobei die tatsächlich durchlaufenen Wege von Meßorganen 307 bzw. 309, beispielsweise Glasmaßstäben, erfaßt und an die Einheit 304 rückgemeldet werden. Diese Einheit ist so programmiert, daß der Meßkopf als ganzes der Schneide nachgeführt wird, und zwar mit konstanter Bahngeschwindigkeit, so daß pro Längeneinheit des Schneidenverlaufs gleich viele Meßpunkte gewonnen werden. Die Einheit ist ferner so programmiert, daß bestimmte systematische Fehler eliminiert werden, beispielsweise
- Nicht-Parallelität der Meßrichtungen X, Y und der Verfahrrichtungen X, Y,
- Nicht-Parallelität der Verfahrrichtung X und der Werkzeugachse,
- Radius des Taststiftes, usw.

Über die Leitungen 310, 312 werden somit die "wahren" Koordinaten der einzelnen abgetasteten Schneidenpunkte ausgegeben und einer Verarbeitungseinheit 314 zugeführt. Diese kann beispielsweise den ermittelten Schneiden-IST-Verlauf mit einem vorgegebenen SOLL-Verlauf vergleichen, Abweichungen zwischen beiden invertieren und die so gewonnenen Daten für die CNC-Steuerung einer Schleifscheiben-Abrichteinrichtung verwenden. Man kann auch ein Fehlerprotokoll ausdrucken und/oder mittels eines CAD-Systems den Schneidenverlauf graphisch darstellen.

Wenn eine Auslenkung des Tastorgans in Z-Richtung festgestellt wird, steuert die Einheit 304 einen Drehantrieb 320 für die Werkzeugspindel an, der dafür sorgt, daß die Z-Auslenkung innerhalb eines vorgegebenen Arbeitsbereichs bleibt. Es ist selbstverständlich möglich, auch den dadurch hervorgerufenen geringen Meßfehler rechnerisch zu eliminieren.

Der Drehantrieb 320 kann auch dafür benutzt werden, das zu vermessende Werkzeug einer "Zitter-Drehbewegung" zu unterwerfen, so daß der Bund 106 periodisch freikommt und seine Reibung auf der Schneide die Meßgenauigkeit nicht beeinträchtigt. Eine Ablaufsteuerung 322 überwacht alle Endschalter einschließlich der fünf im Meßkopf vorgesehenen und setzt die Anlage sofort still, wenn vorgegebene Grenzwerte überschritten werden. In Fig. 9 sind nur die Ausgänge der Endschalter im Meßkopf angedeutet, es versteht sich aber, daß alle beweglichen Teile derart abgesichert sind.

Ersetzt man den Taststift 100 durch eine Tastkugel, kann man mit demselben Tastkopf auch "schichtweise" den Verlauf von zur Z-Achse parallelen Flächen erfassen. Bei unregelmäßigen Flächen würde man der Tastkugel eine Zitterbewegung in Z-Richtung überlagern und aus den Änderungen der Auslenkung in Y-Richtung über jeweils einen Zitterhub könnte die Schräge der Fläche im Abtastbreich errechnet werden, natürlich unter Berücksichtigung der Fehler, die darauf zurückzuführen sind, daß die Tastkugel die zu vermessende Fläche nicht mit ihrem Äquator berührt.

Es versteht sich für den Fachmann von selbst, daß mittels der hier vorgestellten Technik auch ein in den drei Dimensionen X, Y, Z schwingungsfrei abtastendes System aufgebaut werden kann.

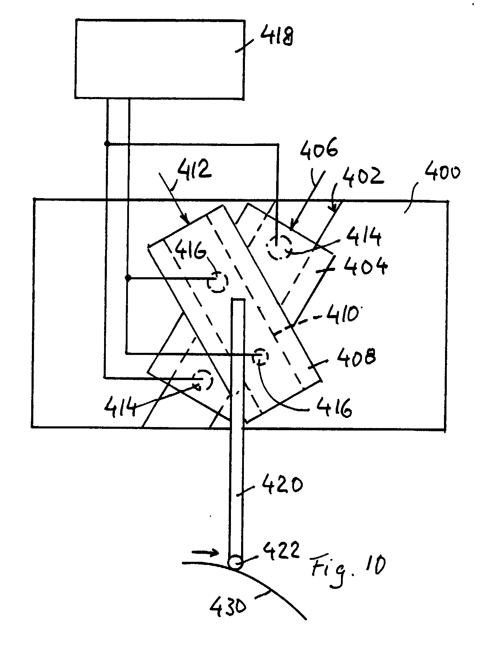

In Figur 10 ist ein vereinfachtes System schematisch dargestellt, bei dem nur Messungen in zwei Quadranten (einer "Halbebene") möglich sind, was aber für beispielsweise die Vermessung der Schneiden von Formfräsern ausreichend ist.

Auf einem Kreuzschlitten 400 ist eine erste Führungsbahn 402 ausgebildet, die sich unter z.B. 60° gegen die X-Richtung erstreckt. In der Führungsbahn ist ein Schlitten 404 gegen die Kraft einer Feder -- symbolisiert durch den Pfeil 406 -- , die sich am Tisch 400 abstützt, translatorisch verlagerbar. Ein weiterer Schlitten 408 ist auf einer am ersten Schlitten ausgebildeten Führungsbahn 410, die sich hier unter 120° zur X-Richtung erstreckt, ebenfalls translatorisch verlagerbar gegen die Vorspannung einer Feder -- symbolisiert durch Pfeil 412 --, die sich am ersten Schlitten abstützt. Meßeinrichtungen, die die jeweilige Verlagerung erfassen, sind nicht dargestellt.

Der erste Schlitten weist Bremseinrichtungen, z.B. Magnetbremsen 414 auf, mittels denen er gesteuert am Tisch 400 festlegbar ist. Der zweite Schlitten ist mittels ähnlicher Bremsen 416 am ersten Schlitten festlegbar. Die Bremsen werden alternierend aktiviert mittels einer als Block 418 angedeuteten Steuereinrichtung.

Der zweite Schlitten trägt einen Ausleger 420, an dessen freiem Ende ein Meßtaster 422 befestigt ist.

Es sei angenommen, daß der Meßtaster bei geklemmtem Schlitten 404 gerade in Pfeilrichtung das Profil 430 abtastet. Wenn sich aus den Werten der X-Verlagerung des Tisches 400 und den Auslenkungen des Schlittens 408 errechnen läßt, daß die durch die Führungsbahn 410 vorgegebene Abtastrichtung ungünstiger wird (weil der Profilverlauf sich nämlich mehr und mehr in Richtung parallel zu dieser Abtastrichtung neigt), so wird ein Umsteuersignal ausgelöst, mit dem der Schlitten 408 geklemmt und der Schlitten 404 freigegeben wird. Jeder Abtastrichtung ist also ein bestimmter Winkelbereich um die Achse der jeweiligen Führung herum zugeordnet, in dem brauchbare Meßwerte gewonnen werden können; im dargestellten Beispiel sind dies für jede Abtastrichtung 120°, von denen 60° einander überlappen, es also von dem vorher abgetasteten Verlauf des Profils abhängt, welche Abtastrichtung gerade freigegeben ist.

Es versteht sich, daß andere Winkel vorgesehen sein können, etwa plus bzw. minus 45° mit zugeordeten Winkelbereichen von 90° und ohne Überlappung.

## Patentansprüche

1. Verfahren zum mechanischen Abtasten eines Profils in mindestens einer Ebene mittels eines Tastorgans, das in dieser Ebene innerhalb von mindestens zwei Quadranten gegen Vorspannkräfte auslenkbar ist, mit den Merkmalen:
- das Tastorgan ist in mindestens zwei nichtparallelen Richtungen auslenkbar,
- die Vorspannkräfte in den mindestens zwei Richtungen sind in ihrer Größe steuerbar,
- die Vorspannkräfte werden in Abhängigkeit von dem Verlauf des zuletzt abgetasteten Profilinkrements derart gesteuert, daß die Auslenkung des Tastorgans nur in einem vorgegebenen Winkelbereich um eine Senkrechte auf das Inkrement erfolgen kann.

2. Verfahren nach Anspruch 1, bei dem das Tastorgan in der Ebene allseits auslenkbar ist, mit den Merkmalen:
- das Tastorgan steht unter der Wirkung einer zu der Ebene im wesentlichen parallelen Anstellkraft vorgegebener Größe und unter der Wirkung zweier zu der Ebene im wesentlichen paralleler Fesselungskräfte, die zu der Anstellkraft im wesentlichen senkrecht verlaufen und gegeneinander gerichtet sind,
- die Fesselungskräfte lassen eine Auslenkung erst zu, wenn sie von einer auf das Tastorgan wirkenden äußeren Kraftkomponente überschritten werden,
- die Wirkrichtungen der Anstellkraft und der Fesselungskräfte werden während des Abtastens in Abhängigkeit von dem ertasteten Profilverlauf derart gesteuert, daß sich die Anstellkraft im wesentlichen senkrecht zu dem gerade abgetasteten Profilinkrement stellt und auf dieses zu gerichtet ist.

3. Verfahren nach Anspruch 2, bei dem die Auslenkungen des Tastorgans nach Größe und Richtung erfaßt werden und die Steuerung der Kraftrichtungen in Abhängigkeit von den erfaßten Größen geregelt wird.

4. Verfahren nach Anspruch 2 oder 3, bei dem die Fesselungskräfte auf das Drei- bis Zwanzigfache der Anstellkraft eingestellt werden.

5. Vorrichtung zum Durchführen des Verfahrens nach einem der Ansprüche 2 bis 4, umfassend:
- ein Tastorgan (100), das zumindest in einer ersten Ebene translatorisch allseits verlagerbar ist,
- einen mit dem Tastorgan gekoppelten, in einer zur ersten parallelen zweiten Ebene gegen Verlagerungen senkrecht zu dieser abgestützten Schwimmtisch,
- Mittel zum Erfassen von Verlagerungen des Schwimmtisches in zwei zueinander senkrechten Richtungen (X, Y) in der zweiten Ebene,
- Mittel zum Übertragen der Anstell- und Fesselungskräfte auf den Schwimmtisch.

6. Vorrichtung nach Anspruch 5, bei dem die Mittel zum Übertragen der Kräfte umfassen:
- ein mit dem Schwimmtisch in Kraftübertragungsverbindung stehendes Pendel, das allseits ausschwingen kann,
- einen Kraftspeicher zum Übertragen einer Vorspannung auf das Pendel, die das Pendel in eine zentrale Ruheposition drängt,
- eine Kupplungsanordnung zwischen dem Kraftspeicher und dem Pendel, die auf das Pendel in Anstell- und Fesselungsrichtung unterschiedlich große Vorspannkraftkomponenten überträgt und relativ zu dem Pendel mittels eines Motors drehbar ist, der in Abhängigkeit von den erfaßten Verlagerungen des Schwimmtisches in den beiden Richtungen ansteuerbar ist.

7. Vorrichtung nach einem der Ansprüche 5 oder 6, montiert auf einem parallel zu den beiden Richtungen (X, Y) verfahrbaren Kreuzschlitten, und mit einer Nachlaufregeleinrichtung zum Nachführen der Vorrichtung derart, daß die erfaßten Schwimmtischverlagerungen rückgängig gemacht werden.

8. Vorrichtung zum Durchführen des Verfahrens nach Anspruch 1 mit den Merkmalen:
- das Tastorgan ist in einer ersten Richtung (A) auf einem ersten Schlitten translatorisch gegen Federkraft verlagerbar,
- der erste Schlitten ist in einer zweiten Richtung (B), die mit der ersten Richtung einen vorgegebenen von Null verschiedenen Winkel einschließt, auf einem zweiten Schlitten translatorisch gegen Federkraft verlagerbar,
- jedem Schlitten ist eine Bremseinrichtung zugeordnet, die alternierend aktiviert sind,
- eine Steuereinrichtung schaltet die Bremseinrichtungen um, wenn das Tastorgan den vorgegebenen Winkelbereich verläßt.

## Claims

1. Method for mechanically scanning a profile in at least one plane by means of a sensor member which within at least two quadrants of said plane is deflectable against biasing forces, comprising the features:
- the sensor member is deflectable in at least two non-parallel directions,
- the amount of bias forces in said at least two directions is controllable,
- the bias forces are controlled in response to the shape of the last scanned profile increment such that the sensor member deflection is allowed to occur only within a predetermined angular range about a normal on said increment.

2. Method of claim 1 wherein said sensor member is deflectable in said plane in all directions, comprising the features:
- the sensor member is subjected to a sensing force directed substantially parallel to said plane and having a predetermined amount, and is subjected to two restraining forces directed substantially parallel to said plane, opposite to one another, and perpendicular to said sensing force,
- the restraining forces permit a deflection only if overcome by an external force component acting on said sensor member,
- the effective directions of said sensing force and restraining forces are controlled, during scanning, in response to the scanned profile shape such that the sensing force is directed substantially perpendicular to the last scanned profile increment and towards the latter.

3. Method of claim 2 wherein amount and direction of the sensor member deflections are detected and the force directions are automatically controlled in response to the detected values.

4. Method of claim 2 or 3 wherein said restraining forces are adjusted to be three to twenty times as high as the sensing force.

5. Apparatus for implementing the method of one of claims 2 to 4, comprising:
- a sensor member (100) which is translatorily displaceable in all directions within a first plane,
- a floating table coupled to said sensor member displaceable in a second plane parallel to said first plane and supported against displacements orthogonal thereto,
- means for detecting displacements of said floating table in two orthogonal directions (X, Y) within said second plane,
- means for transferring said sensing and restraining forces to said floating table.

6. Apparatus of claim 5 wherein said force transferring means comprise:
- a pendulum drivingly connected to said floating table and adapted to swing in all directions,
- a force accumulator for transferring a bias unto said pendulum urging it towards a central rest position,
- a coupling device between said force accumulator and said pendulum, said device transferring unto said pendulum bias force components of different amount in sensing and restraining directions, said device being rotatable relative to said pendulum by means of a motor which is bidirectionally driven in response to detected displacements of the floating table.

7. Apparatus of one of claims 5 or 6 mounted on a cross slide displaceable in said two directions (X, Y), and with a follower servo mechanism for tracking the apparatus such that the detected displacements of the floating table are reversed.

8. Apparatus for implementing the method of claim 1 comprising the features:
- the sensor member is translatorily displaceable against spring bias in a first direction (A) on a first slide,
- the first slide is translatorily displaceable against spring bias on a second slide in a second direction (B) which defines with said first direction an angle different from zero,
- to each slide is a brake device associated, said brake devices being alternatingly activated,
- a control device commutates between the brake devices upon the sensor member leaving said predetermined angular range.

## Revendications

1. Procédé pour palper de façon mécanique un profil dans au moins un plan, au moyen d'un organe palpeur, qui peut être dévié sur au moins deux quarts de cercle contre des forces de précontrainte, comprenant les caractéristiques :
- l'organe palpeur peut être dévié dans au moins deux directions non parallèles,
- les forces de précontrainte peuvent être réglées dans les au moins deux directions,
- les forces de précontrainte sont réglées en fonction du tracé de l'incrément de profil qui vient d'être palpé de sorte que la déviation de l'organe palpeur ne peut se produire que dans un secteur angulaire prédéterminé autour d'une perpendiculaire à l'incrément.

2. Procédé selon la revendication 1, dans lequel l'organe palpeur peut être dévié dans toutes les directions dans ledit plan comprenant les caractéristiques :
- l'organe palpeur est soumis à l'effet d'une force de positionnement d'une grandeur prédéterminée et sensiblement parallèle au plan et à l'effet de deux forces d'immobilisation sensiblement parallèles au plan et qui s'étendent sensiblement perpendiculairement à la force de positionnement et selon des directions opposées,
- les forces d'immobilisation ne permettent une déviation que lorsqu'elles sont dépassées par une composante d'une force extérieure agissant sur l'organe palpeur,
- les directions d'action de la force de positionnement et des forces d'immobilisation sont commandées au cours du palpage en fonction du tracé du profil de sorte que la force de positionnement se trouve sensiblement perpendiculaire à l'incrément du profil qui vient d'être palpé et est dirigée vers celui-ci.

3. Procédé selon la revendication 2, dans lequel les déviations de l'organe palpeur sont saisies en fonction de leur grandeur et de leur direction, et la commande des directions des forces est réglée en fonction des grandeurs saisies.

4. Procédé selon la revendication 2 ou 3, dans lequel les forces d'immobilisation sont ajustées de 3 fois à vingt fois la force de positionnement.

5. Dispositif pour la mise en oeuvre du procédé selon l'une des revendications 2 à 4, comprenant :
- un organe palpeur (100), qui peut être déplacé en translation dans toutes les directions dans au moins un premier plan,
- une table flottante qui est appuyée dans un deuxième plan parallèle au premier et qui est couplée à l'organe palpeur pour empêcher des déplacements perpendiculaires à la table flottante,
- des moyens pour saisir des déplacements de la table flottante dans deux directions perpendiculaires (X, Y) l'une par rapport à l'autre, dans le deuxième plan,
- des moyens pour transmettre les forces de positionnement et d'immobilisation à la table flottante.

6. Dispositif selon la revendications 5, dans lequel les moyens pour transmettre les forces comprennent :
- un pendule qui est en liaison de transmission de forces avec la table flottante, pouvant osciller dans toutes les directions,
- un accumulateur d'énergie pour transmettre une précontrainte au pendule, et qui le force dans une position centrale de repos,
- un dispositif d'accouplement entre l'accumulateur d'énergie et le pendule, transmettant au pendule des composantes de forces de précontrainte de différentes grandeurs dans la direction de positionnement et d'immobilisation et qui peut être mis en rotation par rapport au pendule à l'aide d'un moteur qui peut être commandé dans les deux directions en fonction des déplacements de la table flottante saisis.

7. Dispositif selon l'une des revendications 5 ou 6, monté sur un chariot à deux mouvements rectangulaires pouvant être déplacés parallèlement aux deux directions (X, Y) et comprenant des moyens d'ajustement pour suivre le dispositif de sorte que les déplacements de la table flottante saisis sont annulés.

8. Dispositif pour la mise en oeuvre du procédé selon la revendication 1, comprenant les caractéristiques:
- l'organe palpeur peut être déplacé en translation sur un premier chariot, dans une première direction (A), contre une force de rappel,
- le premier chariot peut être déplacé en translation sur un deuxième chariot, dans une deuxième direction (B) qui forme un angle non nul prédéterminé avec la première direction, contre une force de rappel.
- chaque chariot est équipé d'un système de freinage qui est activé de façon alternative
- un dispositif de commande commute les systèmes de freinage quand l'organe palpeur quitte le secteur angulaire prédéterminé.
